Europäisches Patentamt

European Patent Office

Office européen des brevets

(19)

(11) Veröffentlichungsnummer: **0 498 042 A1**

(12) **EUROPÄISCHE PATENTANMELDUNG**

(21) Anmeldenummer: **91118799.5**

(22) Anmeldetag: **05.11.91**

(51) Int. Cl.5: **F16L 57/00**, F16L 9/133

(30) Priorität: **06.02.91 DE 9101322 U**

(43) Veröffentlichungstag der Anmeldung:
**12.08.92 Patentblatt 92/33**

(84) Benannte Vertragsstaaten:
**AT CH DE DK ES FR GB GR IT LI NL SE**

(71) Anmelder: **Isenmann Siebe GmbH**
**Gerwigstrasse 67**
**W-7500 Karlsruhe(DE)**
Anmelder: **Hein, Lehmann Trenn- und**
**Fördertechnik GmbH**
**Fichtenstrasse 75**
**W-4000 Düsseldorf 1(DE)**

(72) Erfinder: **König, Wolfgang**
**Bergstrasse 3**
**W-7114 Pfedelbach-Heuberg(DE)**

(74) Vertreter: **Patentanwaltsbüro Cohausz &**
**Florack**
**Schumannstrasse 97**
**W-4000 Düsseldorf 1(DE)**

(54) **Rohr mit Innenschicht.**

(57) Die Erfindung betriff ein Rohr (1) mit einer Innenschicht (2), wobei die Innenschicht (2) aus Kunststoff, insbesondere Polyurethan besteht.

EP 0 498 042 A1

Es ist bekannt Rohre innen mit einem Anstrich zu versehen, um diese gegen agressive Materialien zu schützen. Ein solcher Anstrich schützt aber nicht gegen abrasive Medien. Insbesondere beim Fördern von körnigem Gut oder Beton wird die Innenseite des Rohres sehr stark angegriffen.

Aufgabe der Erfindung ist es, eine Rohrinnenschicht so auszubilden, daß sie sicher und über längere Zeit gegen Abrieb geschützt ist.

Diese Aufgabe wird erfindungsgemäß dadurch gelöst, daß die Innenschicht aus Kunststoff besteht, wobei insbesondere Polyurethan verwendet wird.

Eine solche stärkere Schicht aus einem Energie vernichtenden Kunststoff führt zu Rohren mit extrem hoher Verschleißfestigkeit, da die Energie der auf die Innenwandung prallenden Körner durch das Material des Kunststoffes vernichtet wird, so daß es zu einem Verschleiß im erheblichem Maße nicht kommen kann.

Vorteilhafte Ausgestaltungen der Erfindung sind in den Unteransprüchen aufgeführt.

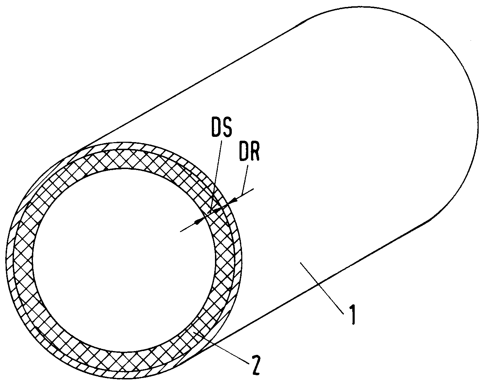

Ein Ausführungsbeispiel der Erfindung ist in der Zeichnung perspektivisch dargestellt und wird im folgenden näher beschrieben:

Ein Rohr 1 aus Metall oder festem Kunststoff weist eine Innenschicht auf, deren Dicke DS größer ist als die Dicke DR des Rohrmantels.

Von größtem Vorteil ist, wenn die Kunststoffschicht aus Polyurethan besteht, da dieses Material in besonders großem Maße die Energie auftreffender Teilchen vernichtet.

Die Polyurethanschicht ist insbesondere auf der Innenseite nicht geschäumt. Dagegen kann sie auf der dem Rohrmantel zugekehrten Seite geschäumt sein.

Um eine ausreichend große Energievernichtung bei großkörnigen Medien insbesondere bei Beton zu erreichen, ist die Dicke der Innenschicht größer als die der Rohrwand.

## Patentansprüche

1. Rohr (1) mit einer Innenschicht (2) **dadurch gekennzeichnet**, daß die Innenschicht (2) aus Kunststoff besteht.

2. Rohr nach Anspruch 1, **dadurch gekennzeichnet,** daß die Kunststoffinnenschicht (2) aus Polyurethan besteht.

3. Rohr nach Anspruch 1 oder 2, **dadurch gekennzeichnet,** daß zwischen der Rohrwand und der Innenschicht (2) mindestens eine weitere Schicht besteht.

4. Rohr nach einem der Ansprüche, **dadurch gekennzeichnet,** daß die Dicke (DS) der Innenschicht (2) wenig geringer, gleich oder größer ist als die Dicke (DR) der Rohrwand.

5. Rohr nach einem der Ansprüche, **dadurch gekennzeichnet,** daß der Kunststoff der Innenschicht (2) nicht geschäumt ist.

6. Rohr nach einem der Ansprüche, **dadurch gekennzeichnet,** daß die Innschicht (2) auf der dem geförderten Medium zugekehrten Seite nicht geschäumt und auf der der Rohrwand zugekehrten Seite geschäumt ist oder regelmäßig angeordnete Hohlräume aufweist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | AU-B-1 868 683 (CHEMLINE  PTY. LTD) <br> * Seite 1, Zeile 1-15 * | 1-4 | F16L57/00 <br> F16L9/133 |
| A | | 5,6 | |
| | --- | | |
| X | AU-B-1 628 070 (STUART FELL & CO.) <br> * das ganze Dokument * | 1,3-5 | |
| | --- | | |
| X | FR-A-2 053 525 (VIBERT) <br> * Seite 1, Zeile 25 - Seite 2, Zeile 6 * | 1-4 | |
| | ----- | | |

**RECHERCHIERTE SACHGEBIETE (Int. Cl.5 )**

F16L

Der vorliegende Recherchenbericht wurde für alle Patentansprüche erstellt

| Recherchenort | Abschlußdatum der Recherche | Prüfer |
|---|---|---|
| DEN HAAG | 13 APRIL 1992 | ANGIUS P. |